# EUROPÄISCHE PATENTANMELDUNG

(11) **EP 1 659 667 A1**
(43) Veröffentlichungstag der Anmeldung: **24.05.2006**
(21) Anmeldenummer: 05022742.0
(22) Anmeldetag: 19.10.2005
(51) Int. Cl.: H02G 3/08

(54) **Installationsverteiler**

(30) Priorität: 18.11.2004 DE 102004055595
(71) Anmelder: Wieland Electric GmbH, 96052 Bamberg (DE)
(72) Erfinder: Lauer, Stephan, 96138 Burgebrach (DE)
(74) Vertreter: Tergau, Dietrich

(57) **Zusammenfassung**

Installationsverteiler mit einem Verteilergehäuse, welches aufweist einen Gehäuseboden (1) und einen Gehäusedeckel (2), welche nach Art von Lagerschalen eine Gehäusewand (4) zwischen sich lagern, wobei in die Gehäusewand (4) eine oder mehrere in ihrer Geometrie an am Installationsverteiler zu adaptierende Verbindungselemente angepasste Aussparungen (13) eingeformt sind.

## Beschreibung

Die vorliegende Erfindung betrifft einen Installationsverteiler gemäß dem Oberbegriff des Anspruchs 1. Derartige Installationsverteiler werden insbesondere im Bereich der Gebäudeinstallation benötigt, um ein von einer Hauptleitung eingespeistes Potenzial auf einzelne Ableitungen aufzusplitten und letztlich zu den Endverbrauchern zu verteilen. Derartige Installationsverteiler werden sowohl zur Verteilung von Versorgungsleitungen als auch zur Verteilung von Datenleitungen eingesetzt. Es ist auch denkbar, mehrere unterschiedliche Leitungstypen mit Hilfe eines Installationsverteilers im Gebäude weiter zu verteilen.

Da die Anforderungen an die zu verteilenden Potenziale in jedem Gebäude unterschiedlich sind, muss für jeden Anwendungsfall ein Installationsverteiler gewissermaßen "maßgeschneidert" werden. Um hinsichtlich der Gestaltung des Installationsverteilers vor Ort flexibel zu sein, ist es deshalb die Aufgabe der vorliegenden Erfindung, einen Installationsverteiler hinsichtlich seines Aufbaus so zu gestalten, dass möglichst viele verschiedene Installationsaufgaben mit ihm gelöst werden können. Zur Lösung dieser Aufgabe besteht der Installationsverteiler aus einem Gehäuseboden und einem Gehäusedeckel. Dieser Gehäuseboden und Gehäusedeckel sind nach Art von Lagerschalen wirksam und lagern zwischen sich eine Gehäusewand. In die Gehäusewand sind wiederum Aussparungen eingeformt. Diese Aussparungen sind in ihrer Geometrie an die zu adaptierenden Verbindungselemente angepasst.

Beim erfindungsmäßigen Installationsverteiler bilden also der Gehäuseboden und der Gehäusedeckel eine Art Skelett für den Verteiler, während die Gehäusewand in erster Linie zur Aufnahme weiterer Verbindungselemente dient. Diese Verbindungselemente sind üblicherweise als Stecker oder Buchsen ausgestaltet. Besonders bevorzugt ist die Verwendung so genannter Snap-in-Teile. Diese Snap-in-Teile können einfach in eine an ihre Geometrie angepasste Aufnahmeöffnung verschnappt werden.

Nach Anspruch 2 ist es vorteilhaft, die Gehäusewand aus mehreren Wandabschnitten zusammenzusetzen. Diese Wandabschnitte können vorgefertigt sein. Jeder Wandabschnitt kann andersartige Aussparungen aufweisen, so dass für jedes am Installationsverteiler zu adaptierende Verbindungselement ein Wandabschnitt mit einer angepassten Aussparung existiert (Anspruch 3). Auf diese Weise kann der Installationsverteiler vor Ort aus den entsprechenden Wandabschnitten zusammengestellt werden.

Besonders vorteilhaft ist die Verwendung von Blechstreifen als Material für die gesamte Gehäusewand bzw. die einzelnen Wandabschnitte. Aus diesen Blechstreifen können die Aussparungen einfach und kostengünstig ausgestanzt werden. Die Gehäusewand besteht dann aus einem oder mehreren Blechstanzteilen (Anspruch 4). Alternativ hierzu ist es auch möglich, Streifen aus Kunststoffmaterial zur Herstellung der Gehäusewand und/oder der Gehäusewandabschnitte zu verwenden (Anspruch 5). Auch aus diesem Kunststoffmaterial können die Aussparungen ausgestanzt werden. Ebensogut ist es aber auch möglich, die Aussparungen während des Kunststoffspritzvorgangs in die Wandabschnitte einzuformen.

Zur Vereinfachung der Montage ist in Anspruch 6 vorgeschlagen, die Wandabschnitte an ihren Endseiten mit Laschen zu versehen, welche in komplementär zu ihnen ausgestaltete Aufnahmeschlitze des jeweils benachbarten Wandabschnitts eingreifen. Nach dem Einfügen der Laschen eines Wandabschnitts in die zugeordneten Aufnahmeschlitze werden die Laschen einfach umgebogen und so an den benachbarten Wandabschnitten gewissermaßen verriegelt. Auf diese Weise können die einzelnen Wandabschnitte mit Nut-Feder-Verbindungen einfach vor Ort miteinander verbunden und zur Gehäusewand ergänzt werden. In bevorzugter Ausgestaltung weisen die Laschen eine Sollbiegestelle auf.

Zur Verbesserung der Festigkeit des Installationsverteilers ist in Anspruch 7 vorgesehen, am Gehäusedeckel und am Gehäuseboden Nuten vorzusehen, in welchen die Gehäusewandabschnitte randseitig gelagert sind.

Die Ansprüche 8 und 9 betreffen eine bevorzugte Geometrie des Gehäusedeckels und des Gehäusebodens. Ein Vorteil der Erfindung besteht darin, dass der Gehäusedeckel und der Gehäuseboden jeweils baugleich ausgestaltet sein können. Es kann also ein- und dasselbe Teil sowohl als Gehäusedeckel als auch als Gehäuseboden verwendet werden. Die in Anspruch 8 vorgeschlagene kreisrunde Geometrie von Gehäusedeckel und Gehäuseboden sorgt für einen besonders stabilen Aufbau der zwischen Gehäusedeckel und Gehäuseboden eingelegten Gehäusewand. Die Gehäusewand besteht dann aus einzelnen Teilsegmenten, welche sich zu einem Kreis ergänzen. Die in Anspruch 9 vorgeschlagene schüsselförmige Ausgestaltung von Gehäusedeckel und Gehäuseboden dient zur Vergrößerung des Innenvolumens des Installationsverteilers bei gleichzeitiger Stabilisierung des Gehäusedeckels oder -bodens gegen Verbiegen. Auf diese Weise ist es auch möglich, weitere Funktionsteile im Installationsverteiler mit unterzubringen.

Anspruch 10 betrifft schließlich ein aus mehreren Einzelgehäusen nach Art eines Baukastens aufgebautes vergrößertes Installationsverteilergehäuse. Anhand der Zeichnungsfiguren ist die Erfindung weiter erläutert. Es zeigen:
- Fig. 1: eine Explosionsdarstellung eines Ausführungsbeispiels des Installationsverteilers mit den Einzelteilen des Verteilergehäuses,
- Fig. 2: das Verteilergehäuse aus Fig. 1 mit zu einer Gehäusewand zusammengesetzten Wandabschnitten,
- Fig. 3: das Gehäuse aus Fig. 1 mit auf den Gehäuseboden aufgesetzter Gehäusewand,
- Fig. 4: das fertig montierte Gehäuse des Installationsverteilers,
- Fig. 5: Umrissgeometrien eines Zentralgehäuses und mehrerer an das Zentralgehäuse anflanschbarer Erweiterungsgehäuse,
- Fig. 6: ein aus einem Zentralgehäuse und zwei Erweiterungsgehäusen zusammengesetztes Verteilergehäuse und
- Fig. 7: Konfigurationsbeispiele für mehrere miteinander kombinierte Zentral-bzw. Erweiterungsgehäuse.

Das Verteilergehäuse des Installationsverteilers besteht im Wesentlichen aus einem Gehäuseboden 1, einem Gehäusedeckel 2 und einer aus einer Vielzahl von Wandabschnitten 3 zusammengesetzten Gehäusewand 4. Gehäuseboden 1 und Gehäusedeckel 2 sind im Ausführungsbeispiel als identische Teile ausgeführt. Es handelt sich um scheibenförmige Körper mit einer schüsselartigen Wölbung. Aufgrund dieser schüsselartigen Wölbung wird das Innenvolumen des späteren Verteilungsgehäuses vergrößert. Zugleich erhöht die Wölbung des den Gehäuseboden 1 bzw. den Gehäusedeckel 2 bildenden Scheibenkörpers die Eigenstabilität des Gehäusebodens 1 bzw. des Gehäusedeckels 2.

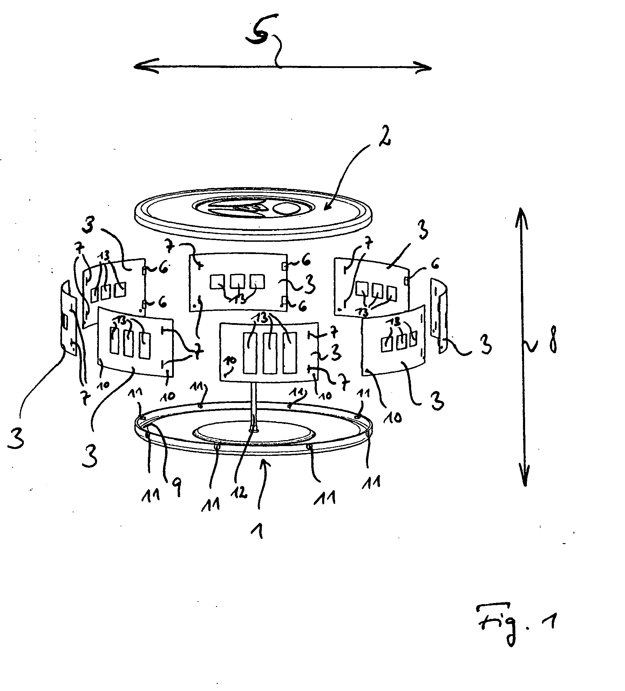

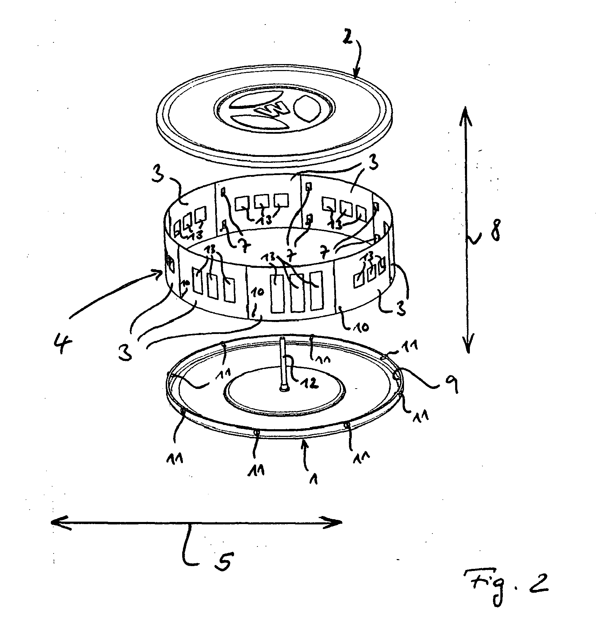

Zur Bildung der Gehäusewand 4 (Fig. 2) sind die einzelnen Wandabschnitte 3 miteinander verbunden. Jeder Wandabschnitt 3 weist hierfür im Bereich seiner einen Endseite jeweils zwei aus dem Wandabschnitt 3 in Querrichtung 5 abragende Laschen 6 auf. An dem den Laschen 6 in Querrichtung 5 abgewandten Ende sind in die Wandabschnitte 3 Aufnahmeschlitze 7 eingeformt. Diese Aufnahmeschlitze 7 sind so ausgestaltet, dass sie jeweils eine zugeordnete Lasche 6 des benachbarten Wandabschnitts 3 aufnehmen können. Zur Fixierung der Wandabschnitte 3 aneinander werden die Laschen 6 in die Aufnahmeschlitze 7 eingesteckt und zur formschlüssigen Fixierung hernach umgebogen. Auf diese Weise sind die einzelnen Wandabschnitte 3 mittels der Laschen 6 und der Aufnahmeschlitze 7 nach Art einer Nut-Feder-Verbindung miteinander formschlüssig zur Gehäusewand 4 verbunden.

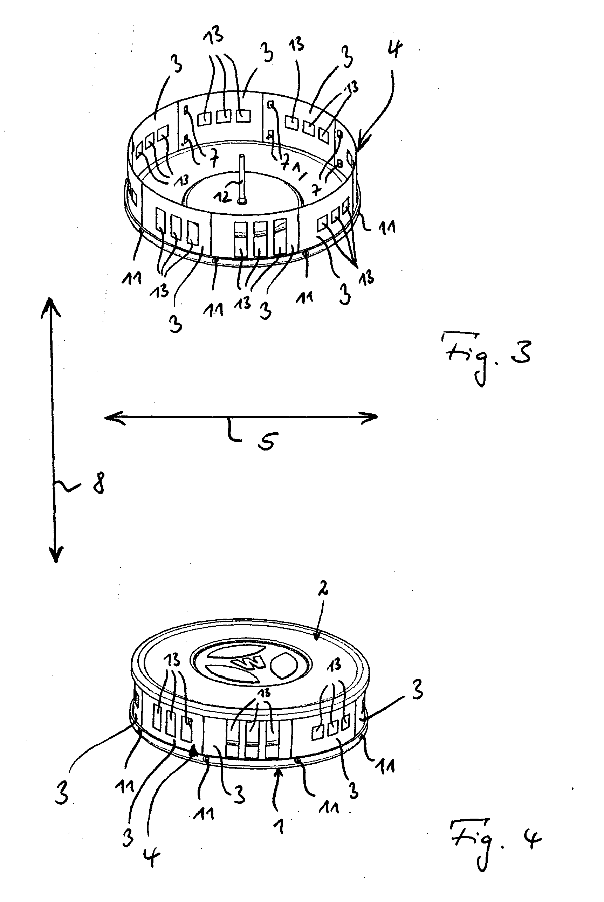

Fig. 2 zeigt die ringförmige Gehäusewand 4 mit den einzelnen Wandabschnitten 3 als Ringsegment. Zur Montage des Gehäusebodens 1 (Fig. 3) steht in der zur Querrichtung 5 senkrecht verlaufenden Längsrichtung 8 in Richtung auf den Innenraum des Installationsverteilers eine Aufnahmenut 9 hinaus. In die Aufnahmenut 9 ist die ringförmige Gehäusewand 4 in Längsrichtung 8 einschiebbar. Zur weiteren formschlüssigen Fixierung der Gehäusewand 4 am Gehäuseboden 1 sind in die Wandabschnitte 3 Lochungen 10 eingebracht. Die Lochungen 10 sind aus den Wandabschnitten 3 vorzugsweise ausgestanzt. Der Gehäuseboden 1 weist den Lochungen 10 entsprechende Lochungen auf, durch welche Nietstifte 11 hindurchgesteckt sind. Mit Hilfe der Nietstifte 11, welche die Wandabschnitte 3 in den Lochungen 10 durchsetzen, ist die Gehäusewand 4 am Gehäuseboden 1 festgenietet (Fig. 3).

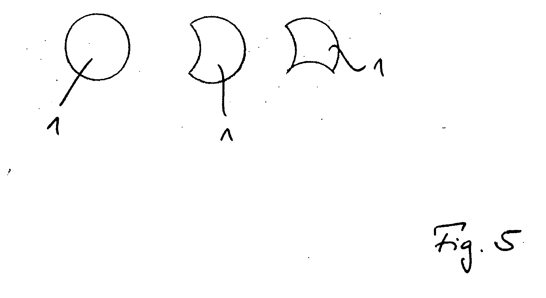

Zur Fixierung des Gehäusedeckels 2 am Verteilergehäuse steht in Längsrichtung 8 aus dem Mittelpunkt des Gehäusebodens 1 eine Gewindestange 12 senkrecht hinaus. Im Montageendzustand (Fig. 4) ruht der Gehäusedeckel 2 auf der Oberkante der aus den Wandabschnitten 3 zusammengesetzten Gehäusewand 4 und ist mittels eines Gewindebolzens mit der Gewindestange 12 verschraubt, so dass der Gehäuseboden 1 und der Gehäusedeckel 2 über die Gewindestange 12 miteinander verschraubt sind.

Zur Funktion als Installationsverteiler sind in die die Gehäusewand 4 bildenden Wandabschnitte 3 Aussparungen 13 eingeformt. Die Aussparungen 13 der einzelnen Wandabschnitte 3 sind ersichtlich von unterschiedlicher Geometrie. Die Aussparungen 13 können als Quadrate oder Rechtecke verschiedener Größe ausgestaltet sein. Im Ausführungsbeispiel weist jeder Wandabschnitt 3 eine identische Anzahl von Aussparungen 13 auf. Auch sind die Aussparungen eines jeden Wandabschnitts 3 im Ausführungsbeispiel identisch. Es sei ausdrücklich angemerkt, dass es mit der Erfindung auch möglich ist, Aussparungen sowohl verschiedener Geometrien als auch verschiedener Größen als auch verschiedener Anzahl in einen Wandabschnitt 3 einzubringen.

Die Funktionsweise der Erfindung ist folgende: In die Aussparungen 13 werden in den Zeichnungen nicht dargestellte Verbindungselemente eingesetzt. Vorzugsweise handelt es sich hierbei um so genannte Snap-in-Teile. Diese Verbindungselemente sind üblicherweise als Stecker- und/oder Buchsenkontakte ausgestaltet.

Die Geometrie einer jeden Aussparung 13 ist auf das in sie einzusetzende Verbindungselement exakt abgestimmt. Zur Realisierung der Erfindung müssen zum Aufbau einer Gehäusewand 4 auf der Baustelle nur die jeweils passenden Wandabschnitte 3 mit den jeweils passenden Aussparungen 13 herausgesucht und miteinander kombiniert werden. Es ist auch möglich, nicht sämtliche Aussparungen 13 eines Wandabschnitts 3 mit in den Zeichnungen nicht dargestellten Verbindungselementen zu belegen. Nicht belegte Aussparungen 13 können einfach durch eine Blindscheibe nach der Montage des Installationsverteilers verschlossen werden. Das erfindungsmäßige Verteilergehäuse für einen Installationsverteiler ermöglicht ein hohes Maß an Flexibilität. An die verschiedensten Verbindungselemente bzw. deren Geometrien muss nur die Geometrie der Aussparungen 13 in einem oder mehreren Wandabschnitten 3 angepasst sein, während derselbe Gehäuseboden 1 und derselbe Gehäusedeckel 2 für die unterschiedlichsten Verteilergehäuse genutzt werden kann. Die unterschiedlichsten Verteilergehäuse unterscheiden sich dann nur in der Ausgestaltung der Aussparungen 13 in den Wandabschnitten 3.

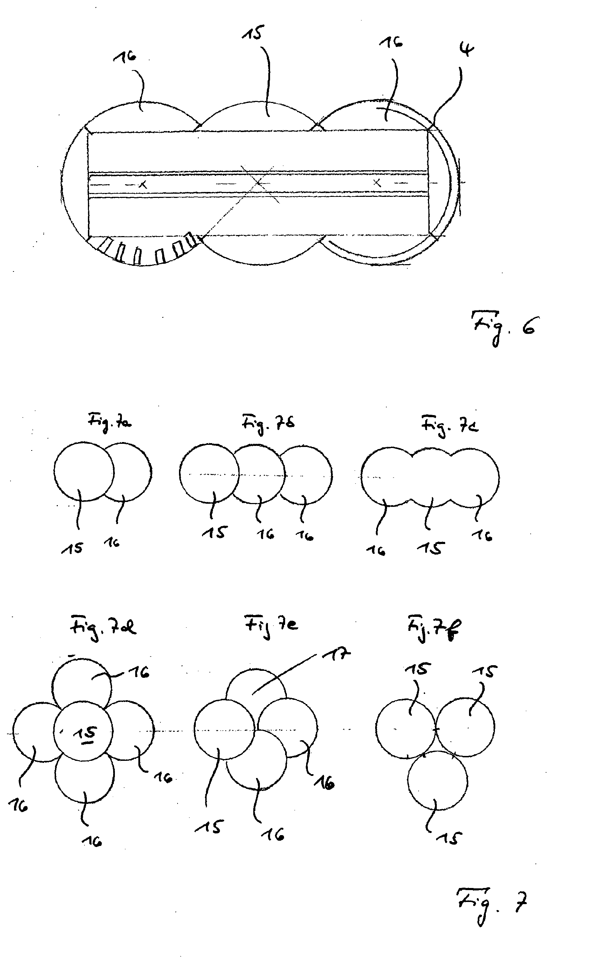

Ein weiterer Aspekt der Erfindung ist in Fig. 5 wiedergegeben. Fig. 5 zeigt in ihrem linken Teil einen kreisförmigen Gehäuseboden 1. In der Mitte und rechts zeigt Fig. 5 weitere Umrissformen von Gehäuseböden 1. So ist der mittlere Gehäuseboden 1 nach Art eines Halbmondes geformt. Die rechte Ausführungsform des Gehäusebodens 1 ist fallschirmartig ausgestaltet. Durch die Verwendung von Gehäuseböden 1 mit unterschiedlicher Geometrie und entsprechend gestalteter Gehäusedeckel 2 ist es möglich, ein modular zusammengesetztes Verteilergehäuse zu schaffen. Ein derartig modular aufgebautes Verteilergehäuse zeigt beispielsweise Fig. 6. Im Zentrum des in Fig. 6 dargestellten Verteilergehäuses ist ein kreisrundes Zentralgehäuse 15 angeordnet. Das Zentralgehäuse 15 entspricht in seinem Aufbau dem in Fig. 4 dargestellten Verteilergehäuse. Allerdings sind am linken und rechten Rand des Zentralgehäuses 15 die Wandabschnitte 3 fortgelassen. Auf diese Weise ist es möglich, jeweils ein halbmondförmiges Erweiterungsgehäuse 16 an das Zentralgehäuse 15 anzuflanschen. Gehäuseboden 1 und Gehäusedeckel 2 des Erweiterungsgehäuses 16 entsprechen in ihrer Geometrie der mittleren Ausführungsform von Gehäuseboden 1 bzw. Gehäusedeckel 2 in Fig. 5. Intern sind das Zentralgehäuse 15 und die Erweiterungsgehäuse 16 dadurch verbunden, dass entsprechende Wandabschnitte 3 fortgelassen sind, um ein durchgehendes Gehäuse zu schaffen. Das in Fig. 6 dargestellte Gehäuse weist auf diese Weise eine Gehäusewand 4 mit einer aus drei Kreisen bestehenden Hülllinie auf.

Fig. 7 zeigt verschiedene Layouts von Zentralgehäuse 15 und Erweiterungsgehäusen 16. So zeigt Fig. 7a im linken Teil ein kreisförmiges Zentralgehäuse 15 und ein rechts angedocktes halbmondförmiges Erweiterungsgehäuse 16. In Fig. 7b sind an das links angeordnete Zentralgehäuse 15 zwei halbmondförmige Erweiterungsgehäuse 16 angedockt. Fig. 7c zeigt das Layout des in Fig. 6 dargestellten Ausführungsbeispiels mit mittig angeordnetem Zentralgehäuse 15 und jeweils seitlich angeordneten Erweiterungsgehäusen 16. Fig. 7d zeigt eine Anordnung eines mittig angeordneten Zentralgehäuses 15 und nach Art eines vierblättrigen Kleeblatts um das mittig angeordnete Zentralgehäuse 15 angeordneten Erweiterungsgehäusen 16. Fig. 7e zeigt wiederum im linken Teil ein Zentralgehäuse 15, an welches seitlich zwei halbmondförmige Erweiterungsgehäuse 16 angeflanscht sind. Das in Fig. 7e obere Erweiterungsgehäuse 17 weist die in Fig. 5 rechts dargestellte Geometrie eines Erweiterungsgehäuses auf. Fig. 7f zeigt schließlich drei miteinander verbrückte Zentralgehäuse 15, die sich ebenfalls durch Fortlassung der aneinander angrenzenden Wandabschnitte 3 zu einem größeren Gehäuse ergänzen.

Aus diesen Beispielen ist ersichtlich, dass mit Hilfe der Erfindung zahlreiche Layouts von Verteilergehäusen realisierbar sind. Auf diese Weise sind die erfindungsmäßigen Installationsverteiler sehr gut und flexibel an die jeweiligen Anforderungen vor Ort anpassbar.

Bezugszeichenliste
- 1: Gehäuseboden
- 2: Gehäusedeckel
- 3: Wandabschnitt
- 4: Gehäusewand
- 5: Querrichtung
- 6: Lasche
- 7: Aufnahmeschlitz
- 8: Längsrichtung
- 9: Aufnahmenut
- 10: Lochung
- 11: Nietstift
- 12: Gewindestange
- 13: Aussparung
- 15: Zentralgehäuse
- 16: Erweiterungsgehäuse
- 17: Erweiterungsgehäuse

## Patentansprüche

1. Installationsverteiler mit einem Verteilergehäuse,
**gekennzeichnet durch**
einen Gehäuseboden (1) und einen Gehäusedeckel (2), welche nach Art von Lagerschalen eine Gehäusewand (4) zwischen sich lagern, wobei in die Gehäusewand (4) eine oder mehrere in ihrer Geometrie an am Installationsverteiler zu adaptierende Verbindungselemente angepasste Aussparungen (13) eingeformt sind.

2. Installationsverteiler nach Anspruch 1,
**gekennzeichnet durch**
eine aus mehreren Wandabschnitten (3) zusammengesetzte Gehäusewand (4).

3. Installationsverteiler nach Anspruch 2,
**gekennzeichnet durch**
Wandabschnitte (3) mit Aussparungen (13) jeweils unterschiedlicher Geometrie in Anpassung an unterschiedliche Verbindungselemente.

4. Installationsverteiler nach einem der Ansprüche 1 bis 3,
**gekennzeichnet durch**
Blechstreifen als Gehäusewand (4) und/oder Wandabschnitt (3) mit vorzugsweise jeweils ausgestanzten Aussparungen (13).

5. Installationsverteiler nach einem der Ansprüche 1 bis 3,
**gekennzeichnet durch**
Streifen aus Kunststoffmaterial als Gehäusewand (4) und/oder Wandabschnitt (3) mit vorzugsweise ausgestanzten Aussparungen (13).

6. Installationsverteiler nach einem der Ansprüche 1 bis 5,
**dadurch gekennzeichnet,**
**dass** die einzelnen, die Gehäusewand (4) bildenden Wandabschnitte (3) endseitig Laschen (6) aufweisen, welche in entsprechende Aufnahmeschlitze (7) des jeweils benachbarten Wandabschnitts (3) eingreifen zur Verbindung der Wandabschnitte (3) nach Art einer Nut-Feder-Verbindung.

7. Installationsverteiler nach einem der Ansprüche 1 bis 6,
**dadurch gekennzeichnet,**
**dass** die Gehäusewand (4) und/oder die Wandabschnitte (3) in Aufnahmenuten (9) am Gehäuseboden (1) und am Gehäusedeckel (2) gelagert einliegen und dass die Aufnahmenuten (9) jeweils aus dem Gehäuseboden (1) und dem Gehäusedeckel (2) in Richtung auf den Gehäuseinnenraum abstehen.

8. Installationsverteiler nach einem der Ansprüche 1 bis 7,
**dadurch gekennzeichnet,**
**dass** der Gehäuseboden (1) und der Gehäusedeckel (2) kreisrund ausgestaltet sind.

9. Installationsverteiler nach einem der Ansprüche 1 bis 8,
**gekennzeichnet durch**
einen schüsselförmigen Gehäuseboden (1) und **durch** einen schüsselförmigen Gehäusedeckel (2).

10. Installationsverteiler nach einem der Ansprüche 1 bis 9,
**gekennzeichnet durch**
ein ein Zentralgehäuse (15) bildendes Verteilergehäuse und **durch** ein oder mehrere am Zentralgehäuse (15) angeflanschte Verteilergehäuse als Erweiterungsgehäuse (16,17).
